# EUROPÄISCHE PATENTANMELDUNG

(11) **EP 1 650 524 A2**
(43) Veröffentlichungstag der Anmeldung: **26.04.2006**
(21) Anmeldenummer: 05019298.8
(22) Anmeldetag: 06.09.2005
(51) Int. Cl.: F28F 19/04, F28F 21/06, F28F 21/00

(54) **Wärmetauscher und Verfahren zum Herstellen eines Wärmetauschers**

(30) Priorität: 14.09.2004 DE 102004044873
(71) Anmelder: Behr GmbH & Co. KG, 70469 Stuttgart (DE)
(72) Erfinder: Kämmler, Georg, Dr., 70439 Stuttgart (DE)

(57) **Zusammenfassung**

Die Erfindung betrifft einen Wärmetauscher, insbesondere einen Kühlmittelkühler oder einen Ladeluftkühler, für ein Kraftfahrzeug, mit einem Gehäuse (1) oder Gehäuseteil aus Kunststoff, das von einem Medium durchströmt wird.

Um einen Wärmetauscher zu schaffen, der einfach und kostengünstig herstellbar ist und hohe Temperaturen aushält, ist das Gehäuse (1) oder Gehäuseteil aus einer Trägerkomponente (21) mit einem Kunststoffmaterial gebildet, die auf der dem Medium zugewandten Seite von einer Schutzkomponente (22) aus einem anderen Kunststoffmaterial bedeckt ist, das bei hohen Temperaturen, insbesondere gegenüber Flüssigkeiten, wie Wasser und Glykol, chemisch beständig ist.

## Beschreibung

Die Erfindung betrifft einen Wärmetauscher, insbesondere ein Kühlmittelkühler oder einen Ladeluftkühler, für ein Kraftfahrzeug, mit einem Gehäuse oder einem Gehäuseteil aus Kunststoff, das von einem Medium durchströmt wird. Die Erfindung betrifft auch ein Verfahren zum Herstellen eines derartigen Wärmetauschers.

Im Bereich der Kühlmittelkühlung und der Abgaskühlung werden im Zuge der verschärften Abgasgesetzgebung zunehmend Bauteile aus hochtemperaturfesten Werkstoffen benötigt. Kühler aus Metall, insbesondere aus Aluminium, halten hohe Temperaturen aus, sind jedoch relativ teuer in der Herstellung. Bauteile aus Standardkunststoffen haben den Nachteil, dass sie keine hohen Temperaturen aushalten und von aggressiven Medien angegriffen werden. Hochleistungskunststoffe, wie zum Beispiel fluorhaltige Kunststoffe, halten zwar höhere Temperaturen aus und können auch beständig gegen Chemikalien sein, eignen sich jedoch wegen ihrer niedrigen Festigkeit und Steifigkeit und einer starken Kriechneigung unter Belastung nicht als Konstruktionswerkstoffe.

Aufgabe der Erfindung ist es, einen Wärmetauscher, insbesondere einen Kühlmittelkühler oder einen Ladeluftkühler für ein Kraftfahrzeug, mit einem Gehäuse oder Gehäuseteil aus Kunststoff, das von einem Medium durchströmt wird, zu schaffen, der einfach und kostengünstig herstellbar ist und hohe Temperaturen aushält. Aufgabe der Erfindung ist es auch, ein Verfahren eines solchen Wärmetauschers anzugeben.

Die Aufgabe ist bei einem Wärmetauscher, insbesondere einem Kühlmittelkühler oder einem Ladeluftkühler, für ein Kraftfahrzeug, mit einem Gehäuse oder Gehäuseteil aus Kunststoff, das von einem Medium durchströmt wird, dadurch gelöst, dass das Gehäuse oder Gehäuseteil aus einer Trägerkomponente mit einem Kunststoffmaterial gebildet ist, die auf der dem Medium zugewandten Seite von einer Schutzkomponente aus einem anderen Kunststoffmaterial bedeckt ist, das bei hohen Temperaturen, insbesondere gegenüber Flüssigkeiten, wie Wasser und Glykol, chemisch beständig ist. Vorzugsweise ist das Gehäuse oder Gehäuseteil, zum Beispiel ein Wasserkasten eines Kühlers, so ausgelegt, dass es bei einem Überdruck von 2,1 bis 3,0 bar Temperaturen von 220° bis 300°C aushält. Die Erfindung liefert den Vorteil, dass Kunststoffe mit verschiedenen Eigenschaften so kombiniert, dass der Wärmetauscher auch bei hohen Temperaturen und Drücken gegen Chemikalien beständig ist. Darüber hinaus liefert die Verbindung von verschiedenen Kunststoffmaterialien den Vorteil, dass das Gewicht des Wärmetauschers, zum Beispiel im Vergleich zu einem Wärmetauscher aus Aluminium, reduziert werden kann.

Ein bevorzugtes Ausführungsbeispiel des Wärmetauschers ist dadurch gekennzeichnet, dass die Trägerkomponente ein Verbundsystem mit einer Matrix umfasst, in die Verstärkungsstoffe eingebettet sind. Durch die Verstärkungsstoffe kann die Festigkeit und Steifigkeit des Gehäuses oder Gehäuseteils deutlich erhöht werden.

Ein weiteres bevorzugtes Ausführungsbeispiel des Wärmetauschers ist dadurch gekennzeichnet, dass in die Matrix der Trägerkomponente Fasem, insbesondere Glasfasern, eingebettet sind. Anstelle von Glasfasern können aber auch Kohlefasern oder Aramidfasem verwendet werden. Es kann auch von Vorteil sein, mineralische oder Nano-Füllstoffe, wie Ruß, Kieselsäure, Whiskers oder Titanoxid, in die Matrix einzubetten.

Ein weiteres bevorzugtes Ausführungsbeispiel des Wärmetauschers ist dadurch gekennzeichnet, dass in das Kunststoffmaterial der Schutzkomponente Füllstoffe eingebettet sind. Durch die Einbettung von mineralischen oder Nano-Füllstoffen, wie Ruß, Kieselsäure, Whiskers oder Titanoxid, in die Schutzkomponente kann eine Anpassung an die Ausdehnung der Trägerkomponente erreicht werden. Darüber hinaus kann die Verbundfestigkeit oder auch die Schutzwirkung der Schutzkomponente verbessert werden.

Ein weiteres bevorzugtes Ausführungsbeispiel des Wärmetauschers ist dadurch gekennzeichnet, dass die Schutzkomponente deutlich dünner als die Wandstärke des Gehäuses oder Gehäuseteils ist. Da das für die Schutzkomponente verwendete Kunststoffmaterial deutlich teuerer als das für die Trägerkomponente verwendete Kunststoffmaterial ist, können auf diese Art und Weise die Materialkosten erheblich reduziert werden.

Ein weiteres bevorzugtes Ausführungsbeispiel des Wärmetauschers ist dadurch gekennzeichnet, dass die Schutzkomponente aus Polyphenylensulfid (PPS) gebildet ist. Polyphenylensulfid (PPS) ist ein teilkristalliner, unpolarer Kunststoff mit einer sehr geringen Wasseraufnahme, der kurzzeitig Temperaturen von bis zu 300°C aushält und eine hohe Beständigkeit gegen Chemikalien aufweist.

Ein weiteres bevorzugtes Ausführungsbeispiel des Wärmetauschers ist dadurch gekennzeichnet, dass die Schutzkomponente aus einem teilaromatischen Polyamid, zum Beispiel aus PA 6T/66 oder Polyphatalamid (PPA), gebildet ist. Durch die Erhöhung der Amidgruppen und den Einbau aromatischer Monomere kann die Schmelztemperatur erhöht werden.

Ein weiteres bevorzugtes Ausführungsbeispiel des Wärmetauschers ist dadurch gekennzeichnet, dass die Schutzkomponente aus Polyphenylensulfid (PPS) gebildet ist.

Weitere bevorzugte Ausführungsbeispiele des Wärmetauschers sind dadurch gekennzeichnet, dass die Trägerkomponente aus Polyamid, insbesondere aus Polyamid 66 oder aus Polyamid 6T/66 gebildet ist. Im Rahmen der vorliegenden Erfindung haben sich diese Kunststoffe als besonders vorteilhaft erwiesen.

Weitere bevorzugte Ausführungsbeispiele des Wärmetauschers sind dadurch gekennzeichnet, dass die Schutzkomponente aus Polypropylen (PP), Polyphtalamid (PPA), Polyphenylensulfid (PPS) oder aus Polyamid 6T/66 gebildet ist. Im Rahmen der vorliegenden Erfindung haben sich diese Kunststoffe als besonders vorteilhaft erwiesen.

Bei einem Verfahren zum Herstellen eines vorab beschriebenen Wärmetauschers, insbesondere eines Kühlmittelkühlers oder eines Ladeluftkühlers, für ein Kraftfahrzeug, mit einem Gehäuse oder einem Gehäuseteil, insbesondere einem Wasserkasten, aus Kunststoff, das von einem Medium durchströmt wird, ist die oben bezeichnete Aufgabe dadurch gelöst, dass der Wärmetauscher beziehungsweise das Gehäuse oder Gehäuseteil, insbesondere der Wasserkasten, im Mehrkomponenten-Spritzgießverfahren erzeugt wird. Das Mehr- oder Zweikomponentenverfahren wird auch als Sandwich- oder Monosandwichverfahren bezeichnet. Dabei werden zeitversetzt über mindestens zwei verschiedene Aggregate verschiedene Kunststoffschmelzen kombiniert eingespritzt.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Figur 1: eine perspektivische Darstellung eines erfindungsgemäßen Wasserkastens;
- Figur 2: den Wasserkasten aus Figur 1 in der Vorderansicht und
- Figur 3: die Ansicht eines Schnitts entlang der Linie III-III in Figur 2.

Bekannte Kraftfahrzeugkühler umfassen beispielsweise einen oberen und einen unteren Wasserkasten. Zwischen den Wasserkästen ist ein Kühlnetz mit einer Vielzahl von Kühlrippen angeordnet.

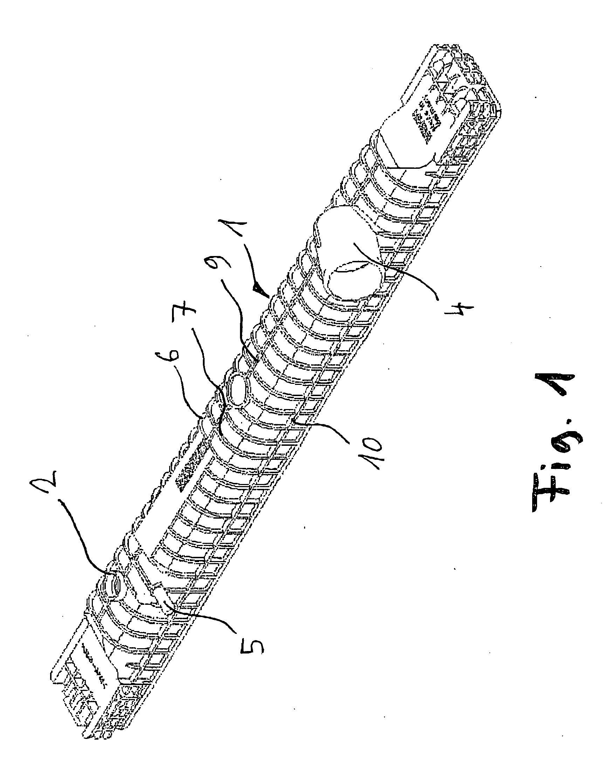

In den Figuren 1 bis 3 ist ein oberer Wasserkasten 1 eines (nicht dargestellten) Kraftfahrzeugkühlers in verschiedenen Ansichten dargestellt. Der Wasserkasten 1 hat im Wesentlichen die Gestalt einer länglichen Halbschale, deren Enden im Wesentlichen rechteckförmig ausgebildet sind und die einen im Wesentlichen U-förmigen Querschnitt aufweist. Der Wasserkasten 1 weist einen Einfüllstutzen 2 zum Einfüllen von Kühlmitteln auf. Außerdem weist der Wasserkasten 2 einen Eintrittsstutzen 4 auf, durch den von einer (nicht dargestellten) Brennkraftmaschine über eine geeignete Schlauchverbindung das zu kühlende Kühlmittel in den Wasserkasten 1 gelangt. Darüber hinaus weist der Wasserkasten 1 einen weiteren Stutzen 5 auf, der zum Beispiel zum Anschluss einer Überlaufleitung dient.

Der Wasserkasten 1 ist aus verschiedenen Kunststoffkomponenten gebildet und weist außen mehrere Querrippen 6 und 7 sowie Längsrippen 9 und 10 auf, die dazu dienen, die mechanische Steifigkeit des Wasserkastens 1 zu erhöhen.

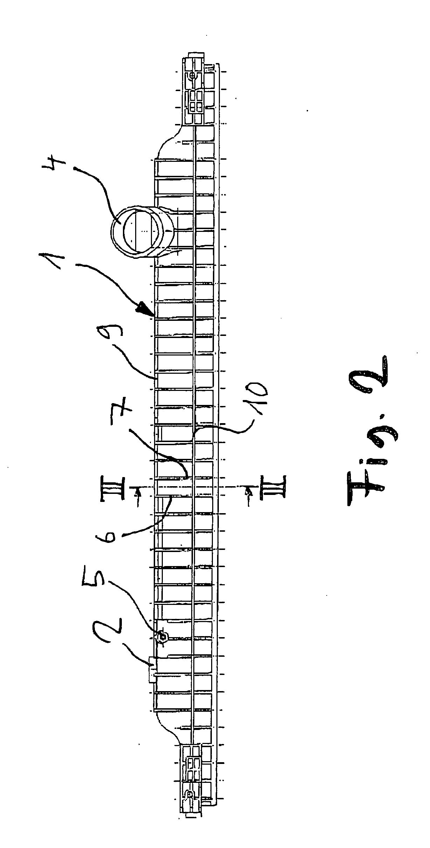

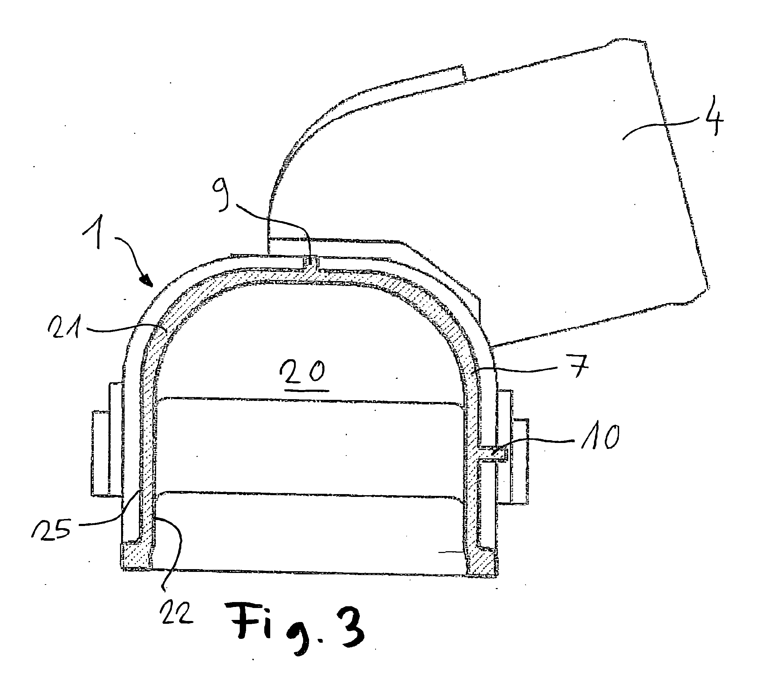

In Figur 3 ist die Ansicht eines Schnitts entlang der Linie A III-III in Figur 2 dargestellt. In der Schnittansicht sieht man, dass der Wasserkasten 1 einen U-förmigen Querschnitt aufweist, der nach unten offen ist. Die offene Unterseite dient dazu, den Wasserkasten 1 an ein (nicht dargestelltes) Kühlnetz mit einer Vielzahl von Kühlrippen anzuschließen. Innerhalb des U-förmigen Querschnitts weist der Wasserkasten 1 einen Aufnahmeraum für Kühlmittel, insbesondere Wasser, auf, das durch den Eintrittsstutzen 4 in den Aufnahmeraum 20 eintritt und von dem Aufnahmeraum 20 in das an der Unterseite des Wasserkastens 1 angeschlossene Kühlnetz gelangt.

Der Wasserkasten 1 umfasst eine Trägerkomponente 21 aus einem Kunststoffmaterial mit einer hohen Festigkeit. Die Trägerkomponente 21 ist zum Innenraum 20 des Wasserkastens 1 hin mit einer Schutzkomponente 22 versehen, die deutlich dünner als die Trägerkomponente 21 und aus einem anderen Kunststoffmaterial als die Trägerkomponente 21 gebildet ist. Das Kunststoffmaterial der Schutzkomponente 22 hält hohe Temperaturen aus und ist gegen Chemikalien beständig. Bei 25 ist angedeutet, dass die Trägerkomponente 21 nach außen hin mit einer Schutzschicht 25 versehen sein kann.

Für die Schutzkomponente 22 werden Werkstoffe verwendet, die einen optimalen Oberflächenschutz zu dem Aufnahmeraum 20 hin gewährleisten. Für die Trägerkomponente werden Werkstoffe verwendet, die eine hohe Festigkeit gewährleisten. Die Trägerkomponente 21 und die Schutzkomponente 22 sowie gegebenenfalls die Schutzschicht 25 werden im Mehrkomponenten-Spritzgießverfahren erzeugt. Dabei werden etwas zeitversetzt über verschiedene Aggregate verschiedene Kunststoffschmelzen kombiniert eingespritzt.

Folgende Werkstoffe werden gemäß der vorliegenden Erfindung bevorzugt eingesetzt: Polyphenylensulfid (PPS), Polyamid 6 (PA6), Polyamid 66 (PA 66), Polyphtalamid (PPA), Polyamid 6T/66 (PA 6T/66) und Polyamid 46 (PA 46). Die Werkstoffe werden mit oder ohne Faserverstärkung verwendet. Zur Verstärkung können Glasfasern, Kohlefasern oder Aramidfasem verwendet werden. Die Eigenschaften der verwendeten Werkstoffe können durch mineralische Füllstoffe oder Nanocomposites eingesetzt werden.

Aufgrund der verschiedenen mechanischen Belastungen bei Kühlmittelkühlem und Ladeluftkühlern ist es aus Werkstoffkostengründen und Gewichtsgründen sinnvoll, den jeweiligen Belastungen angepasste Werkstoffe für die Trägerkomponente und die Schutzkomponente zu wählen. Für die Schutzkomponente 22 ist insbesondere ein Polyphenylensulfid (PPS) geeignet, das sich mit einem Polyamid verbinden lässt. Bei Kühlmittelkästen kann es, je nach Anwendungsfall, auch schon ausreichen, wenn für die Schutzkomponente 22 ein teilaromatisches Polyamid (PPA, PA 6T/66 etc.) eingesetzt wird, um die Hydrolyseeigenschaften zu verbessern.

Für Kühlmittelkühler haben sich im Rahmen der vorliegenden Erfindung die folgenden Werkstoffkombinationen als besonders vorteilhaft erwiesen, wobei zur Verstärkung der Trägerkomponente Glasfasern (GF) verwendet werden:

| | Trägerkomponente | Schutzkomponente |
|---|---|---|
| 1. | GFxx / PA66 | PP |
| 2. | GFxx / PA66 | PPA |
| 3. | GFxx / PA66 | PA 6T/66 |

Für Ladeluftkühler haben sich die folgenden Werkstoffkombinationen als besonders vorteilhaft erwiesen, wobei zur Verstärkung der Trägerkomponente Glasfasern (GF) oder Langfaserthermoplaste (LFT) verwendet werden:

| | Trägerkomponente | Schutzkomponente |
|---|---|---|
| 1. | LFTxx / PA66 | PPS |
| 2. | LFTxx/PA66 | PA 6T/66 |
| 3. | GFxx / PA66 | PA 6T/66 |
| 4. | GFxx / PA 6T/66 | PPS |
| 5. | GFxx / PA66 | PPS |

Eine Verstärkung der Schutzkomponente insbesondere mittels Glasfasern (GF) oder Langfaserthermoplasten (LFT) kann zu einem Ausgleich einer herstellungs- und/oder altersbedingten Schwindung und/oder thermischen Ausdehnung führen und Spannungen reduzieren oder verhindern.

## Patentansprüche

1. Wärmetauscher, insbesondere Kühlmittelkühler oder Ladeluftkühler für ein Kraftfahrzeug, mit einem Gehäuse (1) oder Gehäuseteil aus Kunststoff, das von einem Medium durchströmbar ist, **dadurch gekennzeichnet, dass** das Gehäuse (1) oder Gehäuseteil aus einer Trägerkomponente (21) mit einem Kunststoffmaterial gebildet ist, die auf der dem Medium zugewandten Seite von einer Schutzkomponente (22) aus einem anderen Kunststoffmaterial bedeckt ist, das bei hohen Temperaturen, insbesondere gegenüber Flüssigkeiten, wie Wasser und Glykol, chemisch beständig ist.

2. Wärmetauscher nach Anspruch 1, **dadurch gekennzeichnet, dass** die Trägerkomponente (21) ein Verbundsystem mit einer Matrix umfasst, in die Verstärkungsstoffe eingebettet sind.

3. Wärmetauscher nach Anspruch 2, **dadurch gekennzeichnet, dass** in die Matrix der Trägerkomponente (21) Fasem, insbesondere Glasfasern, eingebettet sind.

4. Wärmetauscher nach einem der vorhergehenden Ansprüche, **dadurch gekennzeichnet, dass** in das Kunststoffmaterial der Schutzkomponente (22) Füllstoffe eingebettet sind.

5. Wärmetauscher nach einem der vorhergehenden Ansprüche, **dadurch gekennzeichnet, dass** die Schutzkomponente (22) deutlich dünner als die Wandstärke des Gehäuses (1) oder Gehäuseteils ist.

6. Wärmetauscher nach einem der vorhergehenden Ansprüche, **dadurch gekennzeichnet, dass** die Schutzkomponente (22) aus Polyphenylensulfid (PPS) gebildet ist.

7. Wärmetauscher nach einem der Ansprüche 1 bis 5, **dadurch gekennzeichnet, dass** die Schutzkomponente (22) aus einem teilaromatischen Polyamid, zum Beispiel aus PA 6T/66 oder Polyphtalamid (PPA), gebildet ist.

8. Wärmetauscher nach einem der vorhergehenden Ansprüche, **dadurch gekennzeichnet, dass** die Trägerkomponente (21) aus Polyamid gebildet ist.

9. Wärmetauscher nach einem der Ansprüche 1 bis 7, **dadurch gekennzeichnet, dass** die Trägerkomponente (21) aus Polyamid 66 oder aus Polyamid 6T/66 gebildet ist.

10. Wärmetauscher nach einem der vorhergehenden Ansprüche, **dadurch gekennzeichnet, dass** die Schutzkomponente (22) aus Polypropylen (PP), Polyphtalamid (PPA), Polyphenylensulfid (PPS) oder aus Polyamid 6T/66 gebildet ist.

11. Verfahren zum Herstellen eines Wärmetauschers insbesondere nach einem der vorhergehenden Ansprüche, vorzugsweise eines Kühlmittelkühlers oder eines Ladeluftkühlers, für ein Kraftfahrzeug, mit einem Gehäuse (1) oder einem Gehäuseteil aus Kunststoff, das von einem Medium durchströmbar ist, **dadurch gekennzeichnet, dass** der Wärmetauscher im Mehrkomponenten-Spritzgießverfahren erzeugt wird.
